# EUROPEAN PATENT SPECIFICATION

(11) **EP 1 987 258 B1**
(45) Date of publication and mention of the grant of the patent: **13.03.2013**
(21) Application number: 06779780.3
(22) Date of filing: 27.06.2006
(51) Int. Cl.: A63C 5/00, A63C 5/04

(54) **CARRYING STRUCTURE FOR FURNITURE, ESPECIALLY FOR KITCHEN FURNITURE OR THE LIKE**
TRAGSTRUKTUR FÜR MÖBELSTÜCK, INSBESONDERE FÜR KÜCHENMÖBEL ODER DERGLEICHEN
STRUCTURE DE SUPPORT DESTINÉE À DES MEUBLES, EN PARTICULIER DES MEUBLES DE CUISINE OU ANALOGUES

(30) Priority: 21.02.2006 IT MO20060057
(43) Date of publication of application: 05.11.2008
(73) Proprietor: Glem Gas S.p.A., 41018 San Cesario sul Panaro (IT)
(72) Inventor: SABATINI, Roberto, I-41100 Modena (IT)
(74) Representative: Brunacci, Marco
(86) International application number: PCT/IB2006/001759
(87) International publication number: WO 2007/096695

(56) References cited:
- EP-A- 1 159 891
- WO-A-90/00684
- WO-A-2006/043898
- DE-A1- 1 429 602
- DE-U1-202004 001 722
- FR-A- 1 239 881
- FR-A1- 2 364 354
- GB-A- 621 680
- US-A- 3 774 344
- US-A- 5 626 404
- US-A- 6 152 553

## Description

### Technical Field

The present invention refers to a carrying structure for furniture, especially for kitchen furniture or the like.

### Background Art

With special reference to the interior decorating industry, the use is known of modular kitchens consisting of distinct modules such as, for instance, door units, units with drawers or baskets, wall units, units for supporting household appliances, sinks, cooktops, etc.

Such modules normally consist of panels fastened together by means of adhesives or the like to define a compartment able to accommodate kitchen equipment such as household appliances (oven, dishwasher), or support shelves, baskets, drawers, etc.

The known modules can be fitted together and arranged so as to define predetermined types of configurations, depending on the conformation of the interior to be furnished and specific aesthetic choices (either made during manufacture or by the end user).

These known kitchens are not without drawbacks, including the fact that, though different variations are in general available, with different measurements and overall dimensions of the single modules, the possible configurations are however limited and not always perfectly adaptable to the interiors to be furnished or specific aesthetic requirements of the user.

Furthermore, the presence of modules of pre-defined dimensions reduces the use of the inner compartment of the furniture units and restricts the relevant storage capacity.

A further drawback of known kitchens is the difficulty in carrying out accurate cleaning operations, due in particular to the presence of spaces between the assembled modules, inside which dust and dirt in general gather. To perform such cleaning operations, which are especially important for maintaining a suitable standard of hygiene inside an environment where food is prepared and cooked, the modules do in fact have to be separated and this operation is hard to do in the case of already-assembled kitchens.

Furthermore the woody composition of the panels generally used to make the modules requires the limited use of water during cleaning operations so as to avoid infiltrations between one panel and another or inside the panels themselves, with the consequent possibility of swelling and/or the generation of mildew.

In particular, close to sinks and household appliances such as refrigerators, washing machines, dishwashers, etc., where the leaking of water and steam is frequent, the formation of swelling and mildew is very frequent.

In fact, the woody panels normally used, even when they are defined as "water repellent", are in any case partially subject to infiltration, especially at the joints between the surfaces and side edges of two panels.

Another drawback consists in the difficulty during packaging, transport and assembly, due to the far-from-negligible overall dimensions of the single modules.

To the above drawbacks must be added the fact that each module consists, in general, of numerous panels (for example with a woody base) fastened together using potentially polluting adhesives that are harmful to people's health. To make these modules in fact, resins are commonly used deriving from substances like formaldehyde, currently considered one of the most common pollutants of interiors. Molecules of formaldehyde are in fact released over time inside the environment and, though it is commonly thought that its concentration inside buildings is normally sufficiently reduced, prolonged exposure to large quantities or accidental swallowing can seriously affect people's health.

Known kitchens are generally made of materials that are not fireproof, with increased risk of accidental fires, also in view of the presence of household appliances such as cooktops, ovens or the like.

Document DE 14 29 602 A1 discloses an enclosure or cabinet particularly suitable for housing electrical apparatus, connection units or the like.

Document EP 1 159 891 A discloses a modular framework for a shelf system made up of connectors in the shape of a cube with threaded bores in each face and connecting bars with threaded rods at their ends which fit into the bores. Removably carrying handles can be fitted into connectors at each end. However, also these known solutions can be improved.

### Disclosure of the invention

The main aim of this invention is to eliminate the problems complained of above and associated with the known state of the art and to excogitate a carrying structure for furniture, especially for kitchen furniture or the like, which is versatile and adaptable to any type of environment or any type of aesthetic requirement.

Within the scope of such technical aim, another purpose of the invention is to permit the sizing of the interior compartment in relation to specific storage requirements.

Another purpose of the invention is to make cleaning easier so as to maintain an adequate standard of hygiene inside the environment.

Another objective of the invention is to make a water-repellent structure which is not therefore liable to the damage notoriously caused by infiltrations and the presence of steam.

Another purpose of the invention is to make kitchen packaging and transport operations easier.

Another purpose of the invention is to avoid the use of polluting substances normally used to make kitchen furniture.

Not the last purpose is to make a furniture structure that reduces the possibility of accidental fires or, in any case, limits their effects.

This aim and these purposes are all achieved by the carrying structure for kitchen furniture according to claim 1.

### Brief Description of the Drawings

Further characteristics and advantages of the present invention will appear even more evident from the detailed description of a preferred, but not exclusive, form of embodiment of a carrying structure for furniture, especially for kitchen furniture or the like, illustrated by way of non limiting example in the accompanying drawings, wherein:
figure 1 is an axonometric view of the structure according to the invention;

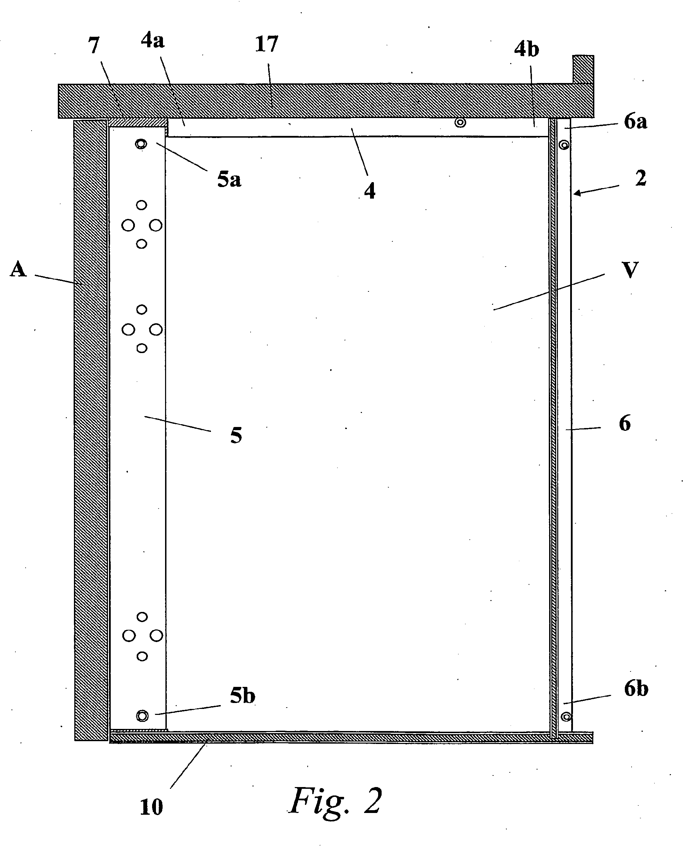

figure 2 is a side view of a modular element of the structure according to the invention;

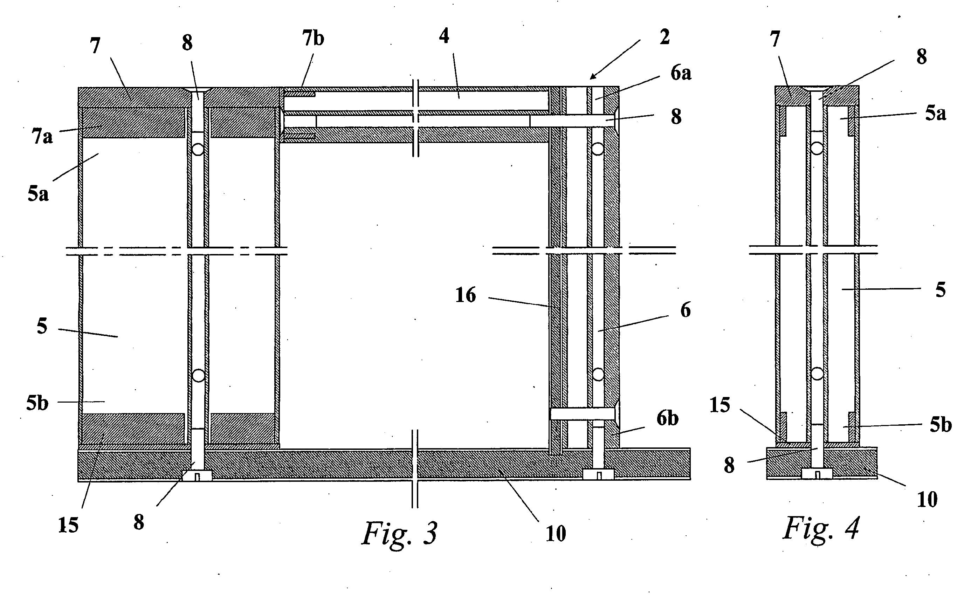

figures 3 and 4 are section views of a modular element of the structure according to the invention;
figures 5, 6 and 7 are views of a part of the modular element.

### Ways of carrying out the Invention

With special reference to such figures, a carrying structure for furniture, especially to be employed in the kitchen furnishing industry, has been generally designated by reference numeral 1.

Structure 1 comprises a plurality of modular elements 2, each of which featuring a pair of uprights 3 and a crosspiece 4. The crosspiece 4 has its ends associated with the uprights 3 by means of the interposition of temporary fastening means. More specifically, each of the modular elements 2 comprises a front upright 5 and a rear upright 6, where the words "front" and "rear" refer, in this description and in a non-exclusive way, to the normal layout of the structure 1 after this has been positioned to furnish an interior.

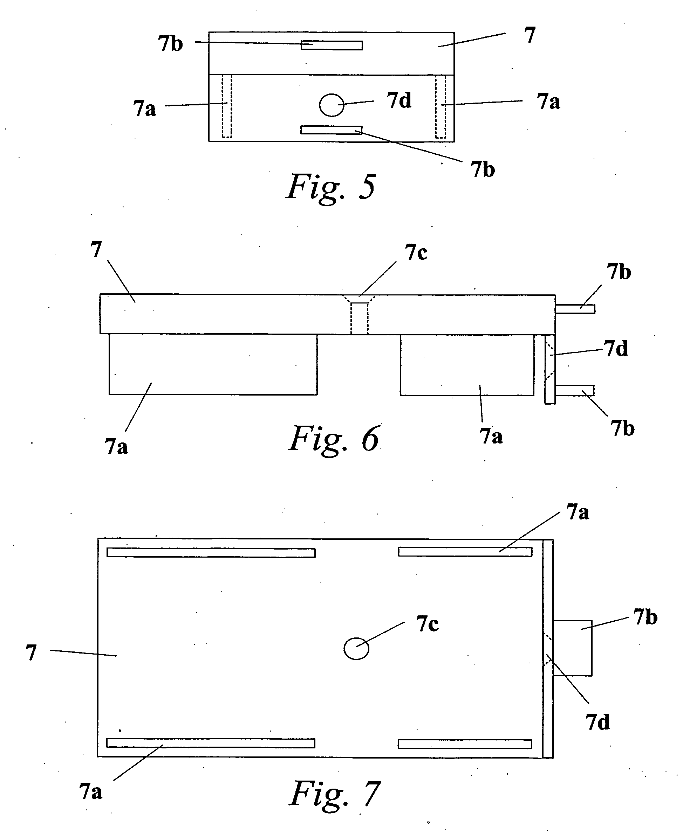

As shown in figures 5, 6 and 7, the temporary fastening means comprise a first joint 7, featuring a pair of lower protruding elements 7a and a pair of rear protruding elements 7b. The particular tubular configuration, open at the ends, of the uprights 3 and the crosspiece 4 permits the slotting in of the lower protruding elements 7a inside the opening defined at the upper end 5a of the front upright 5, and of the rear protruding elements 7b inside the opening defined at the front end 4a of the crosspiece 4 respectively.

The fastening of the upper end 5a and front end 4a to the first joint 7 is done by means of threaded means 8 of the type commonly used, screws or the like, applied to an upper through hole 7c and a rear through hole 7d on first joint 7 respectively.

The rear end 4b of the crosspiece 4 is fastened to the upper end 6a of the rear upright 6 by means of respective threaded means 8.

Other configurations of first joint 7, uprights 3 and the relevant crosspiece 4 are however not to be ruled out.

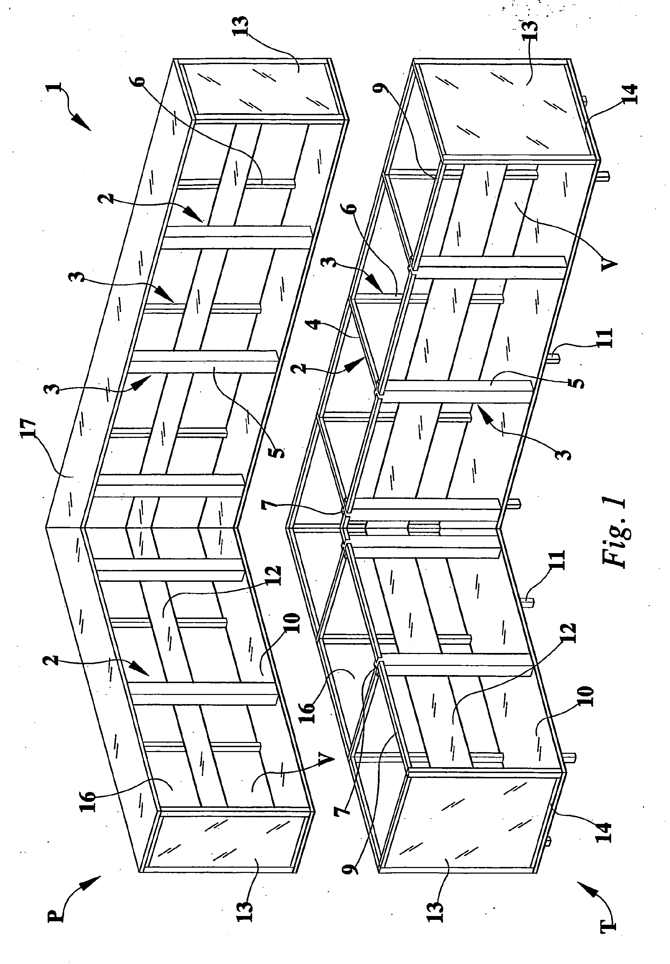

As shown in figure 1, the modular elements, suitably sized and conformed, can be associated with one another to make a hanging structure P or, alternatively, a ground structure T, both commonly used to furnish kitchens or the like.

With special, but not exclusive, reference to the ground structure T shown in figure 1, the modular elements 2 are associated with one another in a removable way by interposing cross connection elements 9, to delimit, below crosspieces 4, a compartment V for housing kitchen equipments or the like (such as, for instance, household appliances or kitchen implements).

In particular, each of the cross connection elements 9 consists of a small crosspiece with ends associated with the front uprights 5 of two modular elements 2 which succeed one another at the respective first joints 7.

A lower top 10 is associated by horizontal arrangement at the lower ends 5b and 6b, of the front uprights 5 and of the rear uprights 6 respectively to define a supporting base for the kitchen implements (or other equipment) arranged inside the compartment V.

Advantageously, the lower top 10 features ground supporting feet 11.

Usefully, the front uprights 5 and the rear uprights 6 can comprise supporting means for an intermediate top 12, arranged horizontally inside compartment V, at a substantially middle section of the uprights.

With special reference to the outer side ends of the structure 1, the modular elements 2 can comprise side panels 13 arranged vertically and able to laterally delimit the compartment V.

Each of the side panels 13 is fastened, by means of the threaded means 8 to the front and rear uprights 5 and 6 of the respective modular element 2.

Such outer modular elements 2 can comprise a further lower crosspiece 14; in the same way as seen for the crosspiece 4, the lower crosspiece 14 has its front end associated with a second joint 15 arranged at the lower end 5b of the front upright 5, and the rear end associated with the rear upright 6 at the lower end 6b. Fastening of the front and rear ends and of the lower crosspiece 14 is done by means of respective threaded means 8.

Further side panels 13 can be associated with the modular elements 2 arranged inside the structure 1, to define a plurality of compartments V, each one separate from the other.

Usefully, one or more rear panels 16 can be associated with the modular elements 2, at the respective rear uprights 6, for the rear closing of the compartment V (at the portion of the structure 1 which commonly faces onto and is adjacent to a wall of the interior to be furnished).

An upper top 17 is associated in a removable way with the modular elements 2, resting on the crosspieces 4 and on the small crosspieces 9, and extends horizontally along the entire ground structure T to define a supporting and/or work top, for instance, for the preparation of food. The upper top 17 can be made in a single body or as several distinct sections positioned alongside each other.

Advantageously, to the front uprights 5 hinging means of a door A can be associated able to open and close the compartment V, or alternatively, both the front uprights 5 and the respective rear uprights 6 can support straight guide means of a sliding element, for example, of a basket or a drawer type.

Similarly to what was seen above for the ground structure T, the hanging structure P comprises respective lower tops 10, intermediate tops 12 and upper tops 17, side panels 13, rear panels 16, as well as, if necessary, hinging means and straight guide means supported by the uprights 3.

The hanging structure P can comprise a supporting column, fastened to a wall of the interior to be furnished, and means, of the traditionally used type, for fastening the rear uprights 6 to such column.

Advantageously, the single modular elements 2 or the entire structure 1 can be made using materials of the metal, fireproof and water-repellent type.

Practically speaking, it has been found how the invention described reaches the proposed aims, and, in particular, the fact is underlined that the presence of the modular elements which can be associated the one with the other permits obtaining an extremely versatile structure that is easily adaptable to any type of interior, both in terms of measurements and different layouts.

The extreme modularity of the structure also permits proposing a broad range of solutions able to cater for even much differing aesthetic requirements.

The size of the internal compartment or compartments can also be as required to satisfy specific storage capacity needs.

It should also be noticed that once assembled, the structure is easy to clean and without the spaces usually found between the modules of traditional modular kitchens and which gather up dust or dirt that is hard to remove.

To this must be added the fact that the manufacture of the modular elements and, if necessary, of the panels using materials of a metal, fireproof and water-repellent type, makes the structure considerably longer lasting and less liable to damage compared to modules of known type and eliminates, for example, problems tied to water infiltration and limits the effects in case of accidental fires breaking out.

The high modularity of the structure also, in a far from negligible way, ensures easier packaging operations and permits reduced overall dimensions during transport.

The manufacture of the elements making up the structure in materials of the metal type, together with assembly using slot-in and/or threaded fastening means permits avoiding the use of commonly used and potentially polluting resins or adhesives.

The invention thus conceived is susceptible of numerous modifications and variations, all of which falling within the scope of the inventive concept. Furthermore all the details can be replaced with others that are technically equivalent.

In practice, the materials used, as well as the shapes and dimensions, may be any according to requirements without because of this moving outside the protection scope of the following claims.

## Claims

1. Carrying structure (1) for kitchen furniture or the like, comprising:
a plurality of modular elements (2) each featuring at least two uprights (3), respectively a front upright (5) and a rear upright (6), and at least one crosspiece (4) associated with said two uprights (5, 6) by placing temporary fastening means (7, 7a, 7b, 8) in between, and
at least one substantially continuous horizontal lower top (10) associated with the lower ends (5b, 6b) of the uprights (5, 6) of said plurality of modular elements (2),
wherein said modular elements (2) are arranged at the lower ends (5b, 6b) of the respective uprights (5, 6) on and supported by said at least one substantially horizontal lower top (10) and are associated with each other in a removable way by interposing cross connection elements (9) so as to delimit, below said crosspieces (4), at least one housing compartment (V) for kitchen equipment or the like, and to support at least one substantially horizontal supporting and/or work top, and
wherein each of said cross connection element comprises at least one small crosspiece (9) which is interposed between two succeeding front uprights (5) of two modular elements (2) which succeed one another on said at least one substantially horizontal lower top (10), with the ends of said small crosspiece (9) being associated with said two succeeding front uprights (5) at the respective fastening means (7,7a,7b,8) with the crosspiece (4) of the corresponding modular element (2),
whereby said carrying structure (1) is adaptable to any type of interior to be furnished, as corresponding to said at least one substantially horizontal lower top (10), both in terms of measurements and different layouts,
said carrying structure (1) being **characterised in that** said temporary fastening means (7,7a,7b,8) comprise at least one joint (7) which can be slotted in between an upper end (5a) of at least one (5) of said uprights, in particular of said front upright (5), and a front end (4a) of said crosspiece (4), said joint (7) featuring a pair of lower protruding elements (7a) and a pair of rear protruding elements (7b),
wherein the uprights (3, 5, 6) and the crosspiece (4) have a tubular configuration, open at the ends, so as to permit the slotting in of the lower protruding elements (7a) of said joint (7) inside the opening defined at the upper end (5a) of the front upright (5) and the slotting in of the rear protruding elements (7b) of said joint (7) inside the opening defined at the front end (4a) of said crosspiece (4),
wherein said joint (7) comprises an upper through hole (7c) and a rear through hole (7d) and the fastening of said upper end (5a) and of said front end (4a) to said joint (7) is done by means of threaded means (8) applied to said upper through hole (7c) and to said rear through hole (7d).

2. Structure according to claim 1, wherein said threaded means (8) are able to fasten the upper end (5a) of said front upright (5) and the front end (4a) of said crosspiece (4) to said joint (7), and to fasten the rear end (4b) of the crosspiece (4) to the upper end (6a) of said rear upright (6).

3. Structure according to claim 1, wherein the modular elements (2) arranged at the outer sides of said carrying structure (1) comprise a further lower crosspiece (14) that is associated at its front end with a further joint (15) arranged at the lower end (5b) of the front upright (5), and is associated at its rear end with the lower end (6b) of the rear upright (6) of the modular element (2).

4. Structure according to one or more of the preceding claims, **characterized by** the fact that it comprises at least one substantially horizontal upper top (17), associated with at least one of said modular elements (2) in a removable way and resting on said crosspiece (4).

5. Structure according to one or more of the preceding claims, **characterized by** the fact that at least one of said uprights (5, 6) comprises supporting means of at least one intermediate top (12), substantially horizontal and arranged inside said compartment (V), at a substantially middle section of said upright (5,6).

6. Structure according to one or more of the preceding claims, **characterized by** the fact that at least one of said uprights (5, 6) comprises hinging means of at least one door able to open and close said compartment.

7. Structure according to one or more of the preceding claims, **characterized by** the fact that at least one of said uprights comprises straight guide means of at least one sliding element along a substantially horizontal direction.

8. Structure according to one or more of the preceding claims, **characterized by** the fact that said sliding element is of a basket, a drawer type or the like.

9. Structure according to one or more of the preceding claim, **characterized by** the fact that at least one of said modular elements (2) comprises a side panel (13) arranged substantially vertical and associated in a removable way with at least one between said uprights (5, 6) and said crosspiece (4).

10. Structure according to one or more of the preceding claims, **characterized by** the fact that it comprises at least one rear panel (16) associated in a removable way with at least one of said modular elements (2), by at least one of said uprights.

11. Structure according to one or more of the preceding claims, **characterized by** the fact that said supporting and/or work top is defined by at least one among said lower top (10), said intermediate top (12) and said upper top (17).

12. Structure according to one or more of the preceding claims, **characterized by** the fact that said modular elements (2) are made using materials of the metal type.

13. Structure according to one or more of the preceding claims, **characterized by** the fact that said modular elements (2) are made using materials of the water-repellent type.

14. Structure according to one or more of the preceding claims, **characterized by** the fact that said modular elements (2) are made using materials of the fireproof type.

15. Structure according to one or more of the preceding claims, wherein said carrying structure exhibits at least two portions, as defined by said horizontal lower top (10) and by said modular elements (2), which are reciprocally arranged according to an angled configuration.

16. Structure according to one or more of the preceding claims, wherein said at least one substantially horizontal lower top (10) features ground supporting feet (11) at positions which are different from and not aligned with those of the lower ends (5b, 6b) of said uprights (5, 6), whereby said modular elements (2) are arranged on and supported by said at least one substantially horizontal lower top (10) independently from said ground supporting feet (11).

## Patentansprüche

1. Tragstruktur (1) für Küchenmöbel oder dergleichen, enthaltend:
eine Vielzahl von modularen Elementen (2), die jeweils mindestens zwei Säulen (3), nämlich eine vordere Säule (5) und eine hintere Säule (6) und mindestens ein Querstück (4) aufweisen, das mit den beiden Säulen (5, 6) durch Anordnung von zeitweiligen Befestigungsmitteln (7, 7a, 7b, 8) zwischen diesen verbunden ist, und
mindestens eine im Wesentlichen durchgehende horizontale untere Deckplatte (10), die mit den unteren Enden (5b, 6b) der Säulen (5, 6) der Vielzahl der modularen Elemente (2) verbunden ist,
wobei die modularen Elemente (2) an den unteren Enden (5b, 6b) der jeweiligen Säulen (5, 6) auf der mindestens einen im Wesentlichen horizontalen unteren Deckplatte (10) angeordnet sind und von dieser getragen werden und miteinander in abnehmbarer Weise durch das Dazwischensetzen von Querverbindungselementen (9) verbunden sind, um so unterhalb der Querstücke (4) mindestens ein Unterbringungsfach (V) für Küchenausrüstung oder dergleichen zu bilden und mindestens eine im Wesentlichen horizontale Trag- und/oder Arbeitsplatte zu tragen, und
wobei jedes der Querverbindungselemente mindestens ein kleines Querstück (9) aufweist, welches zwischen zwei aufeinanderfolgende vordere Säulen (5) von zwei modularen Elementen (2) gesetzt ist, die auf dem mindestens einen im Wesentlichen horizontalen unteren Boden (10) aufeinander folgen, wobei die Enden des kleinen Querstücks (9) mit den beiden aufeinanderfolgenden vorderen Säulen (5) an den jeweiligen Befestigungsmitteln (7, 7a, 7b, 8) mit dem Querstück (4) des entsprechenden modularen Elements (2) verbunden sind,
wodurch die Tragstruktur (1) an jede Art von auszustattendem Innenraum entsprechend der mindestens einen im Wesentlichen horizontalen unteren Deckplatte (10) sowohl hinsichtlich der Abmessungen als auch unterschiedlicher Anordnungen anpassbar ist,
welche Tragstruktur (1) **dadurch gekennzeichnet ist, dass** die zeitweiligen Verbindungsmittel (7, 7a, 7b, 8) mindestens eine Verbindung (7) aufweisen, die zwischen einem oberen Ende (5a) mindestens einer (5) der Säulen, insbesondere der vorderen Säule (5), und einem vorderen Ende (4a) des Querstücks (4) eingesetzt werden kann, welche Verbindung (7) ein Paar untere vorspringende Elemente (7a) und ein Paar hintere vorspringende Elemente (7b) aufweist,
wobei die Säulen (3, 5, 6) und das Querstück (4) einen an den Enden offenen rohrförmigen Aufbau haben, um so das Einsetzen der unteren vorspringenden Elemente (7a) der Verbindung (7) innerhalb der am oberen Ende (5a) der vorderen Säule (5) gebildeten Öffnung und das Einsetzen der hinteren vorspringenden Elemente (7b) der Verbindung (7) innerhalb der an dem vorderen Ende (4a) des Querstücks (4) gebildeten Öffnung zu erlauben,
wobei die Verbindung (7) ein oberes Durchgangsloch (7c) und ein hinteres Durchgangsloch (7d) aufweist und die Befestigung des oberen Endes (5a) und des vorderen Endes (4a) an der Verbindung (7) mittels Gewindemitteln (8) erfolgt, die an dem oberen Durchgangsloch (7c) und dem hinteren Durchgangsloch (7d) angebracht werden.

2. Struktur nach Anspruch 1, bei welcher die Gewindemittel (8) in der Lage sind, das obere Ende (5a) der vorderen Säule (5) und das vordere Ende (4a) des Querstücks (4) an der Verbindung (7) zu befestigen und das hintere Ende (4b) des Querstücks (4) am oberen Ende (6a) der hinteren Säule (6) zu befestigen.

3. Struktur nach Anspruch 1, bei welcher die an den Außenseiten der Tragstruktur (1) angeordneten modularen Elemente (2) ein weiteres unteres Querstück (14) aufweisen, das an seinem vorderen Ende mit einer weiteren Verbindung (15) verbunden ist, die am unteren Ende (5b) der vorderen Säule (5) angeordnet ist und an ihrem hinteren Ende mit dem unteren Ende (6b) der hinteren Säule (6) des modularen Elements (2) verbunden ist.

4. Struktur nach einem oder mehreren der vorhergehenden Ansprüche, **gekennzeichnet durch** die Tatsache, dass sie mindestens eine im Wesentlichen horizontale obere Deckplatte (17) aufweist, die mit mindestens einem der modularen Elemente (2) in abnehmbarer Weise verbunden ist und auf dem Querstück (4) aufliegt.

5. Struktur nach einem oder mehreren der vorhergehenden Ansprüche, **gekennzeichnet durch** die Tatsache, dass mindestens eine der Säulen (5, 6) Tragmittel für mindestens eine Zwischenplatte (12) aufweist, die im Wesentlichen horizontal ist und innerhalb des Faches (V) im Wesentlichen in einem mittleren Abschnitt der Säulen (5, 6) angeordnet ist.

6. Struktur nach einem oder mehreren der vorhergehenden Ansprüche, **gekennzeichnet durch** die Tatsache, dass mindestens eine der Säulen (5, 6) Scharniermittel für mindestens eine Tür aufweist, die in der Lage ist, das Fach zu öffnen und zu schließen.

7. Struktur nach einem oder mehreren der vorhergehenden Ansprüche, **gekennzeichnet durch** die Tatsache, dass mindestens eine der Säulen gerade Führungsmittel für mindestens ein Verschiebeelement entlang einer im Wesentlichen horizontalen Richtung aufweist.

8. Struktur nach einem oder mehreren der vorhergehenden Ansprüche, **gekennzeichnet durch** die Tatsache, dass das Verschiebeelement einem Korb-, einem Schubladentyp oder dergleichen entspricht.

9. Struktur nach einem oder mehreren der vorhergehenden Ansprüche, **gekennzeichnet durch** die Tatsache, dass mindestens eines der modularen Elemente (2) eine Seitenwand (13) aufweist, die im Wesentlichen senkrecht angeordnet ist und in abnehmbarer Weise mit mindestens den Säulen (5, 6) oder dem Querstück (4) oder beidem verbunden ist.

10. Struktur nach einem oder mehreren der vorhergehenden Ansprüche, **gekennzeichnet durch** die Tatsache, dass sie mindestens eine Rückwand (16) aufweist, die in abnehmbarer Weise **durch** mindestens eine der Säulen mit mindestens einem der modularen Elemente (2) verbunden ist.

11. Struktur nach einem oder mehreren der vorhergehenden Ansprüche, **gekennzeichnet durch** die Tatsache, dass die Trag- und/oder Arbeitsplatte **durch** mindestens eine aus der unteren Deckplatte (10), der Zwischenplatte (12) und der oberen Deckplatte (17) gebildet ist.

12. Struktur nach einem oder mehreren der vorhergehenden Ansprüche, **gekennzeichnet durch** die Tatsache, dass die modularen Elemente (2) unter Verwendung von Metallmaterialien hergestellt sind.

13. Struktur nach einem oder mehreren der vorhergehenden Ansprüche, **gekennzeichnet durch** die Tatsache, dass die modularen Elemente (2) unter Verwendung von wasserabweisenden Materialien hergestellt sind.

14. Struktur nach einem oder mehreren der vorhergehenden Ansprüche, **gekennzeichnet durch** die Tatsache, dass die modularen Elemente (2) unter Verwendung von feuersicheren Materialien hergestellt sind.

15. Struktur nach einem oder mehreren der vorhergehenden Ansprüche, bei welcher die Tragstruktur mindestens zwei Abschnitte aufweist, die durch die horizontale untere Deckplatte (10) und durch die modularen Elemente (2) definiert sind, welche zueinander gemäß einer Winkelkonfiguration angeordnet sind.

16. Struktur nach einem oder mehreren der vorhergehenden Ansprüche, bei welcher die mindestens eine im Wesentlichen horizontale untere Deckplatte (10) Bodentragfüße (11) an Positionen aufweist, die von denjenigen der unteren Enden (5b, 6b) der Säulen (5, 6) verschieden und mit diesen nicht fluchtend ausgerichtet sind, wodurch die modularen Elemente (2) unabhängig von den Bodentragfüßen (11) auf der mindestens einen im Wesentlichen horizontalen unteren Deckplatte (10) angeordnet sind und von dieser getragen werden.

## Revendications

1. Structure de support (1) destinée à des meubles de cuisine ou analogues, comprenant :
une pluralité d'éléments modulaires (2) comportant chacun au moins deux montants (3), respectivement un montant avant (5) et un montant arrière (6), et au moins une traverse (4) associée auxdits deux montants (5, 6) par mise en place de moyens de fixation temporaire (7, 7a, 7b, 8) entre eux, et
au moins un plateau inférieur sensiblement horizontal continu (10) associé aux extrémités inférieures (5b, 6b) des montants (5, 6) de ladite pluralité d'éléments modulaires (2),
dans laquelle lesdits éléments modulaires (2) sont placés aux extrémités inférieures (5b, 6b) des montants respectifs (5, 6) sur, et supportés par, ledit au moins un plateau inférieur sensiblement horizontal (10), et sont associés l'un à l'autre de manière amovible par interposition d'éléments de raccordement transversaux (9) afin de délimiter, sous lesdites traverses (4), au moins un compartiment (V) d'hébergement d'équipement de cuisine ou analogue, et afin de supporter au moins un plateau de support et/ou un plan de travail sensiblement horizontal, et
dans laquelle chacun desdits éléments de raccordement transversaux comprend au moins une petite traverse (9) qui est interposée entre deux montants avant successifs (5) de deux éléments modulaires (2) qui se succèdent sur ledit au moins un plateau inférieur sensiblement horizontal (10), les extrémités de ladite petite traverse (9) étant associées auxdits deux montants avant successifs (5) au niveau des moyens de fixation respectifs (7, 7a, 7b, 8) avec la traverse (4) de l'élément modulaire correspondant (2),
ladite structure de support (1) étant adaptable à tout type d'aménagement intérieur, correspondant audit au moins un plateau inférieur sensiblement horizontal (10), à la fois en termes de mesures et de configurations différentes,
ladite structure de support (1) étant ***caractérisée en ce que*** lesdits moyens de fixation temporaire (7, 7a, 7b, 8) comprennent au moins un joint (7) qui peut être encastré entre une extrémité supérieure (5a) d'au moins l'un (5) desdits montants, en particulier ledit montant avant (5), et une extrémité avant (4a) de ladite traverse (4), ledit joint (7) comportant une paire d'éléments saillants inférieurs (7a) et une paire d'éléments saillants arrière (7b),
dans laquelle les montants (3, 5, 6) et la traverse (4) ont une configuration tubulaire, ouverte aux extrémités, afin de permettre l'encastrement des éléments saillants inférieurs (7a) dudit joint (7) dans l'ouverture définie à l'extrémité supérieure (5a) du montant avant (5), et l'encastrement des éléments saillants arrière (7b) dudit joint (7) dans l'ouverture définie à l'extrémité avant (4a) de ladite traverse (4),
dans laquelle ledit joint (7) comprend un trou de passage supérieur (7c) et un trou de passage arrière (7d), et la fixation de ladite extrémité supérieure (5a) et de ladite extrémité avant (4a) audit joint (7) est réalisée par des moyens filetés (8) appliqués dans ledit trou de passage supérieur (7c) et ledit trou de passage arrière (7d).

2. Structure selon la revendication 1, dans laquelle lesdits moyens filetés (8) sont aptes à fixer l'extrémité supérieure (5a) dudit montant avant (5) et l'extrémité avant (4a) de ladite traverse (4) audit joint (7), et à fixer l'extrémité arrière (4b) de la traverse (4) à l'extrémité supérieure (6a) dudit montant arrière (6).

3. Structure selon la revendication 1, dans laquelle les éléments modulaires (2) placés au niveau des côtés extérieurs de la structure de support (1) comprennent une autre traverse inférieure (14) qui est associée au niveau de son extrémité avant à un autre joint (15) placé au niveau de l'extrémité inférieure (5b) du montant avant (5) et qui est associée au niveau de son extrémité arrière à l'extrémité inférieure (6b) du montant arrière (6) de l'élément modulaire (2).

4. Structure selon l'une ou plusieurs des revendications précédentes, ***caractérisée par** le fait qu*'elle comprend au moins un plan supérieur sensiblement horizontal (17) associé à au moins l'un desdits éléments modulaires (2) de manière amovible et reposant sur ladite traverse (4).

5. Structure selon l'une ou plusieurs des revendications précédentes, ***caractérisée par le fait qu'**au* moins l'un desdits montants (5, 6) comprend des moyens de support d'au moins un plateau intermédiaire (12), sensiblement horizontal et placé à l'intérieur dudit compartiment (V), au niveau d'une section sensiblement médiane desdits montants (5, 6).

6. Structure selon l'une ou plusieurs des revendications précédentes, ***caractérisée par le fait qu'**au* moins l'un desdits montants (5, 6) comprend des moyens d'articulation d'au moins une porte apte à ouvrir et fermer ledit compartiment.

7. Structure selon l'une ou plusieurs des revendications précédentes, ***caractérisée par le fait qu'**au* moins l'un desdits montants comprend des moyens de guidage droit d'au moins un élément coulissant dans une direction sensiblement horizontale.

8. Structure selon l'une ou plusieurs des revendications précédentes, ***caractérisée par le fait que*** ledit élément coulissant est de type panier, tiroir ou analogue.

9. Structure selon l'une ou plusieurs des revendications précédentes, ***caractérisée par le fait qu'**au* moins l'un desdits éléments modulaires (2) comprend un panneau latéral (13) disposé de manière sensiblement verticale et associé de manière amovible à au moins l'un d'entre lesdits montants (5, 6) et ladite traverse (4).

10. Structure selon l'une ou plusieurs des revendications précédentes, ***caractérisée par le fait qu'**il* comprend au moins un panneau arrière (16) associé de manière amovible à au moins l'un desdits éléments modulaires (2) par au moins l'un desdits montants.

11. Structure selon l'une ou plusieurs des revendications précédentes, ***caractérisée par le fait que*** ledit plateau de support et/ou plan de travail est défini par au moins l'un parmi ledit plateau inférieur (10), ledit plateau intermédiaire (12) et ledit plan supérieur (17).

12. Structure selon l'une ou plusieurs des revendications précédentes, ***caractérisée par le fait que*** lesdits éléments modulaires (2) sont réalisés en utilisant des matériaux de type métallique.

13. Structure selon l'une ou plusieurs des revendications précédentes, ***caractérisée par le fait que*** lesdits éléments modulaires (2) sont réalisés en utilisant des matériaux de type hydrofuge.

14. Structure selon l'une ou plusieurs des revendications précédentes, ***caractérisée par le fait que*** lesdits éléments modulaires (2) sont réalisés en utilisant des matériaux de type ignifuge.

15. Structure selon l'une ou plusieurs des revendications précédentes, dans laquelle ladite structure de support présente au moins deux parties, définies par ledit plateau horizontal inférieur (10) et par lesdits éléments modulaires (2), qui sont assemblées entre elles selon une configuration angulaire.

16. Structure selon l'une ou plusieurs des revendications précédentes, dans laquelle au moins un plateau inférieur sensiblement horizontal (10) comporte des pieds (11) de support au sol dans des positions qui diffèrent et ne sont pas alignées avec celles des extrémités inférieures (5b, 6b) desdits montants (5, 6), lesdits éléments modulaires (2) étant placés sur, et supportés par, ledit au moins un plateau inférieur sensiblement horizontal (10) indépendamment desdits pieds (11) de support au sol.
